# EUROPÄISCHE PATENTANMELDUNG

(11) **EP 1 834 695 A1**
(43) Veröffentlichungstag der Anmeldung: **19.09.2007**
(21) Anmeldenummer: 07004910.1
(22) Anmeldetag: 09.03.2007
(51) Int. Cl.: B01J 31/40, B01J 31/24, B01J 38/70, B01J 38/58, C07F 9/50, C07F 9/53

(54) **Verfahren zur Rückgewinnung von phosphorhaltigen Liganden, aus Metallkomplexen mit Phosphinliganden**

(30) Priorität: 15.03.2006 DE 102006011867
(71) Anmelder: Saltigo GmbH, 40764 Langenfeld (DE); Universität Paderborn, 33098 Paderborn (DE)
(72) Erfinder: Schlummer, Björn, Dr., 53115 Bonn (DE); Scholz, Ulrich, Dr., 45475 Mülheim a.d. Ruhr (DE); Risch, Nikolaus, Prof. Dr., 32657 Lemgo (DE); Majoros, Laszlo, 44098 Paderborn (DE)
(74) Vertreter: Pettrich, Klaus-Günter

(57) **Zusammenfassung**

Beschrieben wird ein Verfahren zur Rückgewinnung von Phosphinliganden aus in homogen katalysierten Reaktionen eingesetzten Übergangsmetallkomplexen, die phosphinhaltige Liganden enthalten, bei dem man
a) das nach Beendigung einer homogenen katalysierten Reaktion zurückbleibende Reaktionsgemisch mit einen Oxidationsmittel kontaktiert,
b) anschließend das Reaktionsgemisch zur Abtrennung der entstandenen Übergangsoxids mit einem mit dem Reaktionsgemisch unlöslichen organischen Lösungsmittel extrahiert und dann
c) aus dem von Reaktionsgemisch abgetrennten organischen Lösungsmittel den oxidierten Phosphinligand isoliert.

## Beschreibung

Die Erfindung betrifft ein Verfahren zur Rückgewinnung phosphorhaltiger Liganden, insbesondere homogenen Katalysatorsystemen, bei denen Metallkomplexe mit Phosphinliganden eingesetzt werden.

Verbindungen, die ein oder mehrere Phosphoratome als Koordinationsstelle für Metalle als Strukturmerkmal aufweisen, spielen eine wichtige Rolle als Liganden in einer Vielzahl von katalytischen Prozessen. Besonders im Bereich der homogenen Katalyse ist eine Vielfalt von phosphorhaltigen Liganden zur Steuerung der Reaktivität und Selektivität metallkatalysierter Umsetzungen entwickelt worden. Weisen diese ein oder mehrere Chiralitätszentren auf, so kann eine katalytische Umsetzung auch zu einer Bildung enantiomerenangereicherter Zielmoleküle genutzt werden. Wichtige Beispiele für homogen katalysierte Prozesse, in denen phosphorhaltige Liganden eingesetzt werden, sind unter anderem Hydrierungen, C-C Kreuzkupplungsreaktionen (Heck-, Suzuki-, Kumada-, Negishi, Hayashi-Reaktion), C-N Verknüpfungsreaktionen (Buchwald-Hartwig-Aminierung), 1,4-Additionsreaktionen und viele mehr. Ein charakteristisches Merkmal für die bei diesen Transformationen eingesetzten Liganden ist deren oftmals komplexe Grundstruktur, so dass für die Darstellung dieser Liganden, vor allem im Fall hochaktiver Systeme, mehrstufige aufwendige Synthesen erforderlich sind. Für die industrielle Anwendung bedeutet dies, dass der eingesetzte Ligand einen wesentlichen Kostentreiber des betrachteten Prozesses darstellt. Die Wiedergewinnung des verwendeten Liganden ist deshalb höchst wünschenswert. Zur Lösung dieser Fragestellung sind in der Literatur mehrere Vorgehensweisen beschrieben.

Es lassen sich prinzipiell drei verschiedene Strategien unterscheiden:
1. Chemische Modifikation des einzusetzenden Liganden durch Funktionalisierung mit Ankergruppen, durch die die physikalischen Eigenschaften des Liganden für eine Rückgewinnung positiv beeinflusst werden. Hierzu zählen z. B. die Klasse wasserlöslicher sulfonierter Ligandsysteme, Ligandsysteme, die funktionelle Gruppen zur Verankerung an einem geeigneten Harz tragen sowie fluorierte Ligandensysteme, die durch Einsatz spezieller Lösungsmittelsysteme leichter zurück gewonnen werden können. Nachteile dieser Strategie sind die Veränderung der Struktur des Liganden, die eine aufwendigere Synthese erfordert sowie die oftmals deutlich geringere Aktivität des funktionalisierten Liganden in der katalytischen Umsetzung.
   Literaturbeispiele finden sich in folgenden Publikationen:
   - S. Saffarzadeh-Matin, C. J. Chuck, F. M. Kerton, C. M. Rayner Organometallics; 2004; 23, 22; 5176-5181 beschreiben die Verwendung von Poly(dimethylsiloxan)-funktionalisierten Phosphinen:
   - G.-J. Deng, B. Yi, Y.-Y. Huang, W.-J. Tang, Y.-M. He, Q.-H. Fan Adv. Synth. & Cat. 2004, 346, 12, 1440-1444 beschreiben die Anwendung von BINAP, das chemisch in ein Dendrimergerüst eingebaut ist.
   - Köllhofer, H. Plenio, Chemistry Eur. J. 2003, 9, 6, 1416-1425 beschreiben die Verwendung von Polyethylenglycol-verknüpften Phosphinen für Sonogashira-Kupplungen.
   - B. Pugin, H. Landert, F. Spindler, H.-U. Blaser, Adv. Synth. & Cat. 2002, 344, 9, 974-979 beschreiben die Verwendung von immobilisierten Xyliphos-Liganden. Die Immobilisierung geschieht durch Verankerung des mit einer Aminogruppe funktionalisierten Liganden an Kieselgel oder Polystyrolharzen.
   - T. Ohkuma, H. Takeno, Y. Honda, R. Noyori Adv. Synth. & Cat. 2001, 343, 4, 369-375 beschreiben die Verwendung von derivatisierten BINAP-Liganden, die durch einen Linker an Polystyrolharzkugeln gebunden sind.
   - P. Guerreiro, V. Ratovelomanana-Vidal, J.-P. Genêt, P. Dellis Tetrahedron Lett. 2001, 42, 20, 3423-3426 beschreiben die Verwendung von BINAP-Derivaten, die durch Polyethylenglycol oder eine Guanidiniumsalzeinheit funktionalisiert sind.
   - E. Genin, R. Amengual, V. Michelet, M. Savignac, A. Jutand, L. Neuville, J.-P. Genêt, Adv. Synth. & Cat. 2004, 346, 13-15, 1733-1741 beschreiben die Verwendung von Sulfonsäuregruppen tragenden Triphenylphosphinderivaten und deren Wiedergewinnung durch Verwendung wässriger Systeme,
   All diesen Methoden ist die aufwendige Synthese des für den Zweck der Wiedergewinnung funktionalisierten Liganden gemeinsam. Die katalytische Aktivität des jeweiligen Liganden wird durch die Funktionalisierung darüber hinaus in den meisten Fällen herabgesetzt.
2. Einsatz nichtklassischer Lösungsmittelsysteme. Hierbei werden neue Reaktionsmedien wie z. B. ionische Flüssigkeiten, überkritisches Kohlendioxid oder überkritisches Wasser sowie thermomorphe Systeme eingesetzt. Nachteile dieser Strategie sind der Einsatz der im Vergleich zu organischen Lösungsmittel teuren Reaktionsmedien, die veränderte Reaktivität in den verwendeten Reaktionsmedien, mögliche Kontamination des Produktes durch diese, die Problematik der Entsorgung der Reaktionsmedien sowie erforderliche technische Änderungen im Prozess beim Einsatz überkritischer Systeme. Des weiteren sind auch für diese Methodik oftmals funktionalisierte Ligandstrukturen mit anderen physikalischen Parametern notwendig, um die Reaktion durchführen zu können.
   Literaturbeispiele finden sich in folgenden Publikationen:
   - H. L. Ngo, A. Hu, W. Lin, Tetrahedron Lett. 2005, 46, 4, 595-597 beschreiben die Verwendung von BINAP, das mit zwei Phosphonsäuregruppen funktionalisiert ist, in ionischen Flüssigkeiten.
   - B. Pugin, M. Studer, E. Kuesters, G. Sedehneier, X. Feng, Adv. Synth. & Cat. 2004, 346, 12, 1481-1486 beschreiben die Verwendung von Phosphinliganden in Mehrphasensystemen aus Wasser und ionischen Flüssigkeiten.
   - R. P. J. Bronger, S. M. Silva, P. C. J. Kramer, P. W. N. M. van Leeuwen, Chem. Comm. 2002, 24, 3044-3045 beschreiben die Synthese eines Phenoxaphosphin-modifizierten Liganden, der zudem Imidazoliumsalzgruppen trägt. Dieser Ligand kann in ionischen Flüssigkeiten eingesetzt werden.
   - P. Wasserscheid, W. Keim, Angew. Chem. 2000, 112, 3926-3945 beschreiben in einem Übersichtsartikel die Verwendung ionischer Flüssigkeiten als Reaktionsmedium für homogenkatalytische Prozesse.
   - W. Leitner, Pure & Appl. Chem. 2004, 76, 3, 635-644 beschreibt in einem Übersichtsartikel die Verwendung von überkritischem Kohlendioxid für die Immobilisierung von Katalysatoren.
   - R. H. Fish, Chem. Eur. J. 1999, 5, 6, 1677-1680 beschreibt in einem Übersichtsartikel die Verwendung fluorhaltiger Lösungsmittel für eine Mehrphasenkatalyse mit Fluor-funktionalisierten Liganden.
   All diesen Methoden ist die Verwendung nichtklassischer Lösungsmittel gemeinsam, die eine Änderung bestehender Prozesse in organischen Lösungsmitteln mit sich bringen. Darüber hinaus müssen die verwendeten Liganden in den meisten Fällen funktionalisiert werden, um physikalische Parameter wie z. B. Löslichkeit in dem jeweiligen nichtklassischen Lösungsmittel anzupassen.
3. Die am wenigsten beschriebene Strategie beinhaltet die Wiedergewinnung eines nicht für die Wiedergewinnung funktionalisierten Liganden, der unter Einsatz klassischer Lösungsmittelsysteme wie z. B. organische Lösungsmittel, in der Reaktionsoptimierung die höchste Aktivität zeigt. Vorteile dieser Strategie sind die Vermeidung von Verfahrensumstellungen durch die Wiedergewinnung, der Einsatz des aktivsten Liganden in klassischen Reaktionsmedien sowie eine prinzipiell unbegrenzte Wiederverwendbarkeit des zurückgewonnenen Liganden.

Ansätze hierzu finden sich in folgenden Publikationen:
- J. L. Marugg, M. L. Neitzel, J. Tucker, Tetrahedron Lett. 2003, 7537-7540 beschreiben eine "catch and release" Strategiefür (o-biphenyl)(t-butyl)₂**P**. Dabei wird der Phosphinligand durch Protonierung mit auf Polystyrolharz oder auf Kieselgel immobilisierter Sulfonsäure auf die Festphase gezogen. Die nachfolgende Freisetzung erfolgt mit Ammoniak in Methanol. Es sind >3 Äquivalente der immobilisierten Sulfonsäure für eine vollständige Protonierung notwendig. Darüber hinaus ist diese Methodik generell auf stark basische Phosphine beschränkt, die durch Sulfonsäuren protoniert werden können. Die große Mehrzahl der zur homogenen Katalyse verwendeten Phosphinliganden weist diese stark basischen Eigenschaften am Phosphorzentrum nicht auf.
- B. H. Lipshutz, B. Frieman, H. Birkedal, Org. Lett. 2004, 6, 14, 2305-2308 beschreiben die Komplexierung von Phosphinliganden in Reaktionsgemischen mit Kupfer(I)chlorid. Der unlösliche Komplex fällt aus. Durch Umsetzung mit Dithiolatderivaten wird das Kupfer umkomplexiert und das entsprechende Phosphin freigesetzt. Der Nachteil dieser Methodik ist die Verwendung des toxikologisch bedenklichen Metalls Kupfer als auch mögliche Verluste teilweise oxidierter Phosphine, die nicht mehr den gewünschten Kupferkomplex bilden. Darüber hinaus ist ein Reinigungsschritt in der Methodik nicht vorgesehen und gestaltet sich durch die Isolierung des empfindlichen freien Phosphins nicht trivial.
- B. H. Lipshutz, P. A. Blomgren, Org. Lett. 2001, 3, 12, 1869-1871 beschreiben die Isolierung von Phosphinen aus Reaktionsgemischen mit hochbeladenem chlormethyliertem Polystyrol unter Verwendung von Natriumiodid in Aceton. Die Methodik ist für die Wiedergewinnung von Triphenylphosphin beschrieben. Das gebildete Triphenylphosphoniumiodid-Salz, das kovalent an das Harz gebunden ist, wird durch Lithiumaluminiumhydrid unter Freisetzung von Triphenylphosphin gespalten. Das dabei entstehende Harz ist nicht direkt wiederverwendbar. Nachteile dieser Methodik sind die Einschränkung auf Phosphine, die die gewünschte Alkylierungsreaktion mit dem Harz eingehen, der fehlende Aufreinigungsschritt des empfindlichen freien Phosphins sowie die Bildung großer Mengen von Phosphoniumiodiden an der Festphase, die verfahrenstechnisch nicht wünschenswert ist. Darüber hinaus ist die Verwendung von Lithiumaluminiumhydrid zur Abspaltung im Scale-Up sicherheitstechnisch und ökonomisch nicht wünschenswert.
- A. Falchi, M. Taddei, Org. Lett. 2000, 2, 22, 3429-3431 beschreiben die Abtrennung von Triphenylphosphin und Triphenylphosphinoxid durch Umsetzung mit Polyethylenglycolverlinkten chlorierten Triazinderivaten. Ein Recycling der Liganden, bzw. eine Abtrennung der kovalent gebundenen Phosphine wird nicht beschrieben. Nachteile sind die Verwendung des komplexen und teuren Triazinderivates, die Einschränkung auf Triphenylphosphin, sowie die fehlende Möglichkeit zur Regenerierung des Phosphins.

Die publizierten Methoden zur Wiedergewinnung von Phosphinliganden weisen die beschriebenen Nachteile der Modifizierung bereits optimierter Ligandstrukturen, Verwendung nichtklassischer Lösungsmittelsysteme, die eine Umstellung bestehender Verfahren erfordern, oder die Verwendung aufwendiger Scavenging-Reagenzien auf. Des weiteren ist die Zahl der Recycling-Cyclen durch Abnahme der Aktivität von beispielsweise Festphasengebundenen Liganden ein inhärentes Problem.

Aufgabe der vorliegenden Erfindung war es, ein Verfahren zur Verfügung zu stellen, mit dem sich in wirtschaftlicher Weise aus in der homogenen Katalyse eingesetzten Metallkomplexen mit Phosphinliganden die Phosphinliganden technisch einfach abtrennen lassen, wobei durch diese Abtrennung die Liganden nicht in der Weise chemisch verändert werden dürfen, dass sie nicht mehr regenerierbar sind.

Überraschend wurde nun - gefunden, dass Metallkomplexe mit Phosphinliganden in Reaktionsgemischen, Mutterlaugen und Destillationssümpfen durch einfache Behandlung mit Oxidationsmitteln wie Sauerstoff, Schwefel oder Selen gespalten und die entsprechenden Phosphinliganden als Oxide, Sulfide oder Selenide erhalten werden können. Die Aufreinigung dieser Derivate in oxidierter Form ist leicht durch Umkristallisation möglich. Die Reduktion zu den entsprechenden freien Phosphinen, die in der Qualität den ursprünglich eingesetzten Phosphinen entsprechen, ist ebenso leicht durch bekannte Reduktionsmethoden möglich.

Gegenstand der Erfindung ist daher ein Verfahren zur Rückgewinnung von Phosphinliganden aus in homogenen katalysierten Reaktionen eingesetzten Übergangsmetallkomplexen, die phosphinhaltige Liganden enthalten, bei dem man
a) das nach Beendigung einer homogenen katalysierten Reaktion zurückbleibende Reaktionsgemisch mit einen Oxidationsmittel kontaktiert,
b) anschließend das Reaktionsgemisch zur Abtrennung der entstandenen Übergangsmetalloxide mit einem mit dem Reaktionsgemisch unlöslichen organischen Lösungsmittel extrahiert und dann
c) aus dem von Reaktionsgemisch abgetrennten organischen Lösungsmittel den oxidierten Phosphinligand isoliert.

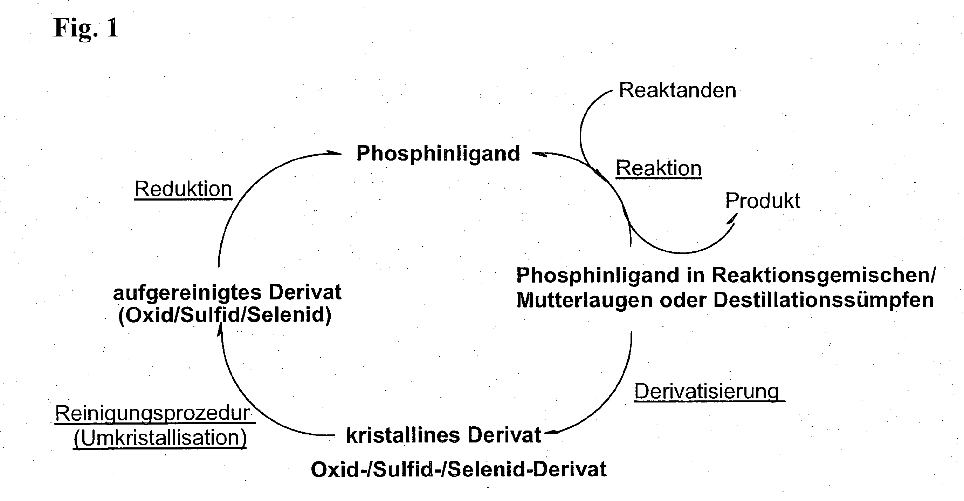

Die Vorteile dieser Methodik sind die Verwendung billiger Derivatisierungsreagenzien, die Vermeidung teurer nichtklassischer Lösungsmittel, die einfache Implementierung in bestehenden industriellen Anlagen sowie die Vermeidung einer nicht umfahrbaren Modifizierung des verwendeten Liganden oder des bereits optimierten katalytischen Prozesses. Da der Ligand nach Aufarbeitung in der ursprünglichen Form in gleicher Qualität zurückerhalten werden kann, ist prinzipiell eine unendliche Zahl von Recycling-Cyclen möglich. In Fig. 1 ist der Ablauf der Wiedergewinnung schematisch dargestellt.

Beispiele für homogen katalysierte Prozesse, deren diese Katalysatoren enthaltenen Reaktionsrückstände erfindungsgemäß zurück gewonnen werden können, sind Hydrierungen, C-C-Kreuzkuppelreaktionen (Heck-, Suzuki-, Kumada-, Negiski-, Hagaski-Reaktionen), C-N-Verknüpfungsreaktionen (Buchwald-Hartwig-Aminierung), - 1,4-Additionsreaktionen. Bevorzugt werden die Liganden der Katalysatoren aus Hydrierungen zurück gewonnen.

Der Prozess ist prinzipiell anwendbar auf alle Phosphinliganden der allgemeinen Formel 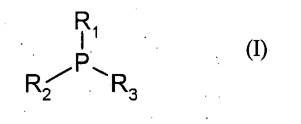 wobei vorzugsweise R₁, R₂ und R₃ unabhängig voneinander für C1-C8-Alkyl-, Aryl-, Arylalkyl, die unabhängig voneinander geeignete Substituenten wie z. B. Cl, Br, I, F, C1-C8-Alkyl-, Aryl-, Arylalkyl, NO₂, tragen können, steht.

Beispiele für derartige Phosphinliganden sind u.a. Cl-MeO-BIPHEP, BINAP, JOSIPHOS die dem Fachmann bekannten und in einer großen Zahl von Übersichtsartikeln und Büchern zusammengefassten Phosphinliganden, die geeignet modifizierte Alkyl- oder Arylreste als Substituenten am Phosphoratom aufweisen und zur Koordination von Übergangsmetallen in katalytischen Reaktionen eingesetzt werden.

Bevorzugt ist der Phosphinligand 5,5'-Dichloro-6,6'-dimethoxy-2,2'-bis(diphenylphosphino)-1,1'-biphenyl.

Üblicherweise sind die genannten Phosphinliganden Liganden eines Übergangsmetallkomplexes. Beispiele für derartige Übergangsmetalle sind Ruthenium, Rhenium, Paladium, Platin. Bevorzugt ist dabei Ruthenium.

Der für einen katalytischen Prozess eingesetzte Phosphorligand kann sich nach Durchführung der katalytischen Reaktion in Mutterlaugen, Destillationssümpfen oder Waschphasen befinden. Der Prozess beinhaltet die Behandlung dieser Reaktionsrückstände mit einem Oxidationsmittel.

Als Oxidationsmittel können sauerstoffhaltige Oxidationsmittel wie Wasserstoffperoxid, Natriumhypochlorit, Halogenoxidderivate, wie z. B. molekularer Sauerstoff, auch in verdünnter Form in Gasen, z. B. in Luft oder Metalloxide dienen. Bevorzugt sind Wasserstoffperoxid und Natriumhypochlorit, besonders bevorzugt ist Wasserstoffperoxid. Weiterhin können als Oxidationsmittel auch andere Elemente der 6. Hauptgruppe des Periodensystems dienen, bevorzugt sind in diesem Fall Schwefel oder Selen, besonders bevorzugt ist Schwefel.

Das durch Behandlung der Reaktionsrückstände mit einem geeigneten Oxidationsmittel erhaltene rohe Phosphinderivat wird durch Extraktion mit einem organischen Lösungsmittel, wie z. B. halogenierte Kohlenwasserstoffe, wie Dichlormethan oder Ether, wie z.B. Dibutylether, Alkohole, aromatische Verbindungen, wie z.B. Toluol aus der Lösung extrahiert, um die gleichfalls entstehenden oxidierten Metalloxide vom gewünschten Phosphinliganden abzutrennen.

Danach kann das Filtrat entweder vom verwendeten Lösungsmittel befreit werden und auf ein für die Aufreinigung durch Umkristallisation geeignetes. Lösungsmittel wie z. B. halogenierte Kohlenwasserstoffe, Ether, Alkohole, aromatische Verbindungen, getauscht werden oder die Umkristallisation direkt aus dem Filtrat erfolgen.

Das so erhaltene hochreine Phosphinderivat kann durch dem Fachmann bekannte Methoden mit einem Reduktionsmittel wie z. B. Wasserstoff oder halogenierte Silane, wie z. B. Trichlorsilan in den gewünschten Phosphinliganden überführt werden.

### Beispiele:

### 1. Wiedergewinnung von 5,5'-Dichloro-6,6'-dimethoxy-2,2'-bis(diphenylphosphino)-1,1'-biphenyl (im Folgenden abgekürzt als: Cl-MeO-BIPHEP) mit S/C Verhältnis = 100

0,073g (0,08 mmol) [RuBr₂-Cl-MeO-BIPHEP] und 1,0 ml (8,0 mmol) Acetessigsäureethylester als zu hydrierendes Substrat wurden in 10 ml entgastem Methylcyclohexan als Lösung in einem 125 ml VA-Autoklaven vorgelegt. Die Hydrierung wurden bei 110°C und unter einem Druck von 50 bar mit der Reaktionsdauer 4h durchgeführt.

Nach dem Entspannen wurde die Reaktionslösung zur Produktabtrennung destilliert. Der Destillationssumpf wurde in 10 ml Dichlormethan aufgenommen und 1 ml WasserstoffperoxidLösung (35 % in Wasser) zugegeben. Das Reaktionsgemisch wurde 1h bei Raumtemperatur gerührt. Dann wurden 25 ml Wasser zugegeben. Die organische Phase wurde abgetrennt und das Lösungsmittel im Vakuum entfernt. Zu dem Rückstand wurden 3 ml Dibutylether gegeben und die Suspension 2 h auf 140 °C erhitzt. Danach wurde das Reaktionsgemisch abgekühlt und vom gebildeten Rutheniumoxid abfiltriert. Das Lösungsmittel des Filtrates wird im Vakuum entfernt. Man erhielt 0,0308 g (0,045 mmol) Cl-Me0-BIPEP-Bis-Oxid. Dies entspricht einer Wiedergewinnung von 56 % d. Th.
³¹P-NMR = 29,04 ppm (entspricht Referenzmaterial)

### 2. Wiedergewinnung von 5,5'-Dichloro-6,6'-dimethoxy-2,2'-bis(diphenylphosphino)-1,1'-biphenyl (im Folgenden abgekürzt als: Cl-MeO-BIPHEP) mit S/C Verhältnis = 10

0,730g (0,80 mmol) [RuBr₂-Cl-MeO-BIPHEP] und 1,0 ml (8,0 mmol) Acetessigsäureethylester als zu hydrierendes Substrat wurden in 60 ml entgastem Methylcyclohexan als Lösung in einem 125 ml VA-Autoklaven vorgelegt. Die Hydrierung wurde bei 110°C und unter einem Druck von 50 bar mit der Reaktionsdauer 4 h durchgeführt.

Nach dem Entspannen wurde die Reaktionslösung zur Produktabtrennung destilliert. Der Destillationssumpf wurde in 10 ml Dichlormethan aufgenommen und 1 ml WasserstoffperoxidLösung (35 % in Wasser) zugegeben. Das Reaktionsgemisch wurde 1 h bei Raumtemperatur gerührt. Dann wurden 25 ml Wasser zugegeben. Die organische Phase wurde abgetrennt und das Lösungsmittel im Vakuum entfernt. Zu dem Rückstand wurden 3 ml Dibutylether gegeben und die Suspension 2 h auf 140°C erhitzt. Danach wurde das Reaktionsgemisch abgekühlt und vom gebildeten Rutheniumoxid abfiltriert. Das Lösungsmittel des Filtrates wurde im Vakuum entfernt. Man erhielt 0,355 g (0,52 mmol) Cl-Me0-BIPEP-Bis-Oxid. Dies entspricht einer Wiedergewinnung von 63 % d. Th.
³¹P-NMR = 29,04 ppm (entspricht Referenzmaterial)

## Patentansprüche

1. Verfahren zur Rückgewinnung von Phosphinliganden aus in homogen katalysierten Reaktionen eingesetzten Übergangsmetallkomplexen, die phosphinhaltige Liganden enthalten, bei dem man
a) das nach Beendigung einer homogenen katalysierten Reaktion zurückbleibende Reaktionsgemisch mit einen Oxidationsmittel kontaktiert,
b) anschließend das Reaktionsgemisch zur Abtrennung der entstandenen Übergangsmetalloxids mit einem mit dem Reaktionsgemisch unlöslichen organischen Lösungsmittel extrahiert und dann
c) aus dem von Reaktionsgemisch abgetrennten organischen Lösungsmittel den oxidierten Phosphinligand isoliert.

2. Verfahren nach Anspruch 1, **dadurch gekennzeichnet, dass** der Phosphinligand die allgemeine Formel 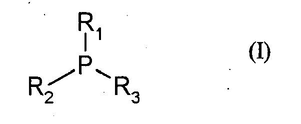 aufweist, wobei R₁, R₂ und R₃ unabhängig voneinander für C₁-C₈-Alkyl-, Aryl-, Arylalkyl stehen, die unabhängig voneinander Substituenten aus der Gruppe Cl, Br, I, F, C₁-C₈-Alkyl-, Aryl-, Arylalkyl-, NO₂, Halogen Alkoxy- und Aryloxy- aufweisen können.

3. Verfahren nach einem der Ansprüche 1 bis 2, **dadurch gekennzeichnet, dass** als Oxidationsmittel Wasserstoffperoxid, Natriumhyperchlorid, molekularer Sauerstoff, Halogenoxidderivate, Schwefel oder Selen eingesetzt werden.

4. Verfahren nach einem der Anspruche 1 bis 3, **dadurch gekennzeichnet, dass** als mit dem Reaktionsgemisch unlöslichen organischen Lösungsmittel, ein halogenierter Kohlenwasserstoff wie Dichlormethan, ein Ether wie Dibutylether, ein Alkohol wie oder eine aromatische Verbindungen wie Toluol ist.

5. Verfahren nach einem der Ansprüche 1 bis 4, **dadurch gekennzeichnet, dass** das Übergangsmetall im Übergangsmetallkomplex, Ruthenium, Palladium, Rhenium oder Platin ist.

6. Verfahren nach einem der vorherigen Ansprüche, **dadurch gekennzeichnet, dass** man den oxidierten Phosphinliganden durch Umkristallisation aus dem organischen Lösungsmittel isoliert.

7. Verfahren nach einem der vorherigen Ansprüche, **dadurch gekennzeichnet, dass** der Phosphinligand 5,5'-Dichloro-6,6'-dimethoxy-2,2'-bis(diphenylphosphino)-1,1'-biphenyl ist.

8. Verfahren nach einem der der vorherigen Ansprüche, **dadurch gekennzeichnet, dass** man den oxidierten Phosphinligand durch Behandlung mit einem Reduktionsmittel wieder in seine ursprüngliche Form zurückführt.

9. Verfahren nach Anspruch 8, **dadurch gekennzeichnet, dass** das Reduktionsmittel Wasserstoff oder ein halogeniertes Silan ist.
